# EUROPEAN PATENT SPECIFICATION

(11) **EP 2 560 415 B1**
(45) Date of publication and mention of the grant of the patent: **02.03.2016**
(21) Application number: 11817710.4
(22) Date of filing: 31.05.2011
(51) Int. Cl.: H04W 8/18, H04W 76/00, H04L 29/08, H04W 4/08, H04W 60/06

(54) **METHOD AND SYSTEM FOR PARTICIPATING IN GROUP CALL**
VERFAHREN UND SYSTEM ZUR TEILNAHME AN EINEM GRUPPENRUF
PROCÉDÉ ET SYSTÈME POUR PARTICIPER À UN APPEL DE GROUPE

(30) Priority: 18.08.2010 CN 201010259170
(43) Date of publication of application: 20.02.2013
(73) Proprietor: ZTE Corporation, Shenzhen, Guangdong 518057 (CN)
(72) Inventor: SHI, Xiu, Shenzhen Guangdong 518057 (CN)
(74) Representative: D'Halleweyn, Nele Veerle Trees Gertrudis
(86) International application number: PCT/CN2011/075004
(87) International publication number: WO 2012/022183

(56) References cited:
- EP-A1- 1 850 614
- WO-A2-2009/034076
- CN-A- 1 625 293
- CN-A- 101 909 249
- "3rd Generation Partnership Project; Technical Specification Group Services and system Aspects; Voice Group Call Service (VGCS); Stage 1 (Release 9)", 3GPP STANDARD; 3GPP TS 42.068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 31 December 2009 (2009-12-31), pages 1-18, XP050401795, [retrieved on 2009-12-31]

## Description

### Technical Field

The present invention relates to a railway dispatching communication system of an integrated and dedicated digital GSM for Railways (GSM-R) specifically designed for railway communication, and particularly, to a method and system for participating in a group call.

### Background of the Related Art

In the 3GPP TS 42.068 protocol, the concept of a "dispatcher" is defined.

In a GSM-R system, members participating in the group call once have two different identities of dispatcher and service subscriber.

The dispatchers' identities must be predefined in a Group Call Register (called GCR for short), and they have the right of speaking at any time, and they can be a fixed network user or a mobile user, and thus a mobile dispatcher can be outside a group call area. The dispatcher can initiate the group call of a certain group ID, and also can receive all group calls of certain group IDs within the group call area. There can be at most 5 dispatchers or no dispatcher in one group call. The dispatchers are managers who have higher authority in the Voice Group Call Service (VGCS) communication, and they use a pair of dedicated channels respectively. The dispatcher can dial a group call reference number to participate in an ongoing group call.

The service subscriber is the mobile user who subscribes to a VGCS in a Home Location Register (HLR). The service subscriber has the right of speaking, but he/she must firstly obtain an uplink channel before speaking. Seen from a terminal used by a user, what the dispatcher can use is a Public Land Mobile-communication Network (PLMN) mobile phone, Public Switched Telephone Network (PSTN) phone or dedicated Fixed users Access Switching (FAS) dispatching station, and what the service subscriber use is a dedicated terminal supporting the group call.

According to the 3GPP TS 42.068 protocol, the dispatcher supports various supplementary services such as Call Forwarding Unconditional and Call Forwarding on mobile subscriber Not Reachable and so on. In abnormal conditions that the terminal powers down or enters a blind zone, the dispatcher can participate in a next group call by registering the call forwarding, but can not continue to participate in the current ongoing group call. Different from the dispatcher, the service subscriber does not support the call forwarding, after the terminal of the service subscriber powers down or enters a cell outside the group call accidently, this service subscriber is not supported in the current protocol to continue to participate in the group call.

The document, WO 2009/034076 A2, discloses wireless networks that employ access restrictions for certain parts of the network, such as networks having cells such as the closed subscriber groups of 3GPP TS36.300 that are open only to members of a pre-designated group.

### Summary of the Invention

The technical problem required to be solved by the present invention is to provide a method and system for participating in a group call, to make a service subscriber who does not support call forwarding and a dispatcher who is in abnormal conditions of power failure or entering a blind zone can continue to participate in corresponding group calls.

In order to solve the above technical problem, the present invention provides a method according to claim 1. Further improvements and embodiments are provided in the dependent claims.

Also provided is a method for participating in a group call, which comprises:
after receiving a request of registering a temporary dispatcher sent by a user, an anchor mobile switching centre initiating a registration request, which includes a group call reference number and a registration number required to be registered by the user, to a group call register;
after receiving a group call message related to the group call reference number, the anchor mobile switching centre using the temporary dispatcher's number registered by the group call register to establish a call to the group call corresponding to the group call reference number.

Preferably, the above method further comprises characteristics as below: the method further comprises:
after receiving the registration request, if the group call register checks that the group call reference number exists, registering the registration number as the temporary dispatcher's number corresponding to the group call reference number.

Preferably, the above method further comprises characteristics as below: the registration request further includes a registration password, and the step of the group call register registering the registration number as the temporary dispatcher's number corresponding to the group call reference number comprises:
if it is checked that the registration password is identical with a listening permission password corresponding to the group call reference number, registering the registration number as the temporary dispatcher's number corresponding to the group call reference number, and recording that the temporary dispatcher has a listening permission; or
if it is checked that the registration password is identical with a listening and speaking permission password corresponding to the group call reference number, registering the registration number as the temporary dispatcher's number corresponding to the group call reference number, and recording that the temporary dispatcher has a listening and speaking permission.

Preferably, the above method further comprises characteristics as below: the group call message includes: a calling number and a called number, and the called number includes the group call reference number; before the step of the anchor mobile switching centre using the temporary dispatcher's number registered by the group call register to establish a call to the group call corresponding to the group call reference number, the method further comprises: judging that the calling number is identical with the temporary dispatcher's number registered by the group call register.

Preferably, the above method further comprises characteristics as below: after the step of the group call register registering the temporary dispatcher's number, the method further comprises:
setting a maximum keep alive timer of the temporary dispatcher, and when the timer times out, deleting the temporary dispatcher's number.

Preferably, the above method further comprises characteristics as below: the method further comprises:
if receiving a request of erasing the temporary dispatcher sent by the user or receiving an answer message of the temporary dispatcher participating in the group call successfully, the anchor mobile switching centre initiating an erasing request, which includes the group call reference number and the registered temporary dispatcher's number, to the group call register;
after receiving the erasing request, if the group call register checks that the group call reference number exists, deleting the temporary dispatcher's number.

In order to solve the above problem, the present invention further provides a system according to claim 6. Further improvements and embodiments are provided in the dependent claims.

Also provided is a system for participating in a group call, which comprises:
an anchor mobile switching centre, configured to: after receiving a request of registering a temporary dispatcher sent by a user, initiate a registration request, which includes a group call reference number and a registration number required to be registered by the user, to a group call register; after receiving a group call message related to the group call reference number, use a temporary dispatcher's number registered by the group call register to establish a call to the group call corresponding to the group call reference number; and
the group call register, configured to: after receiving the registration request, register the registration number as the temporary dispatcher's number corresponding to the group call reference number.

Preferably, the above system further comprises characteristics as below: the registration request further includes a registration password,
the group call register is configured to: if it is checked that the registration password is identical with a listening permission password corresponding to the group call reference number, register the registration number as the temporary dispatcher's number corresponding to the group call reference number, and record that the temporary dispatcher has a listening permission; or
if it is checked that the registration password is identical with a listening and speaking permission password corresponding to the group call reference number, register the registration number as the temporary dispatcher's number corresponding to the group call reference number, and record that the temporary dispatcher has a listening and speaking permission.

Preferably, the above system further comprises characteristics as below: the group call register is further configured to: after registering the temporary dispatcher's number, set a maximum keepalive timer of the temporary dispatcher, and when the timer times out, delete the temporary dispatcher's number.

Preferably, the above system further comprises characteristics as below:
the anchor mobile switching centre is further configured to: if a request of erasing the temporary dispatcher sent by the user is received or an answer message of the temporary dispatcher participating in the group call successfully is received, initiate an erasing request, which includes the group call reference number and the registered temporary dispatcher's number, to the group call register;
the group call register is further configured to: after receiving the erasing request, if checking that the group call reference number exists, delete the temporary dispatcher's number.

In conclusion, with the method and system for participating in the group call provided by the present invention, it enables the service subscriber to participate in a scheduled group call in unexpected conditions that a mobile phone powers down or enters a cell outside the group call; or it enables the dispatcher to enter an ongoing group call again in abnormal conditions of power failure or entering a blind zone.

### Brief Description of Drawings

FIG. 1 is a schematic diagram of a system for participating in the group call according to the present invention.
FIG. 2 is a flow diagram of a method for participating in the group call according to the present invention.
FIG. 3 is a flow diagram of registering a temporary dispatcher according to the example of the present invention.
FIG. 4 is a flow diagram of the method for participating in the group call when the next group call comes according to the example of the present invention.
FIG. 5 is a flow diagram of the method for participating in an ongoing group call according to the example of the present invention.
FIG. 6 is a flow diagram of the method for a user erasing a temporary dispatcher according to the example of the present invention.
FIG. 7 is a flow diagram of the method for an anchor MSC erasing a temporary dispatcher initiatively according to the example of the present invention.
FIG. 8 is a flow diagram of the method for a GCR erasing a temporary dispatcher initiatively according to the example of the present invention.

### Preferred Embodiments of the Present Invention

In order to better understand the present invention, the present invention will be further described in combination with the accompanying drawings and specific examples below.

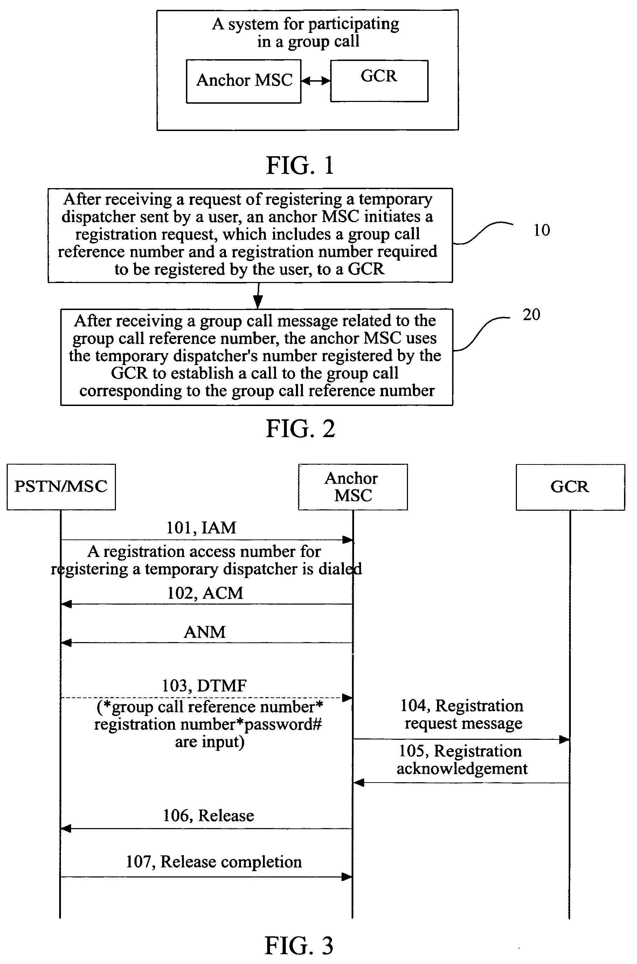

FIG. 1 is a schematic diagram of a system for participating in the group call according to the present invention, and as shown in FIG. 1, the system of the present invention mainly includes: an anchor Mobile Switching Centre (MSC) and a Group Call Register (GCR), wherein,
the anchor MSC is configured to: after receiving a request of registering a temporary dispatcher sent by a user, initiate a registration request, which includes a group call reference number and a registration number required to be registered by the user, to the GCR; after receiving a group call message related to the group call reference number, use a temporary dispatcher's number registered by the GCR to establish a call to the group call corresponding to the group call reference number;
the GCR is configured to: after receiving the registration request, register the registration number as the temporary dispatcher's number corresponding to the group call reference number.

Therefore, if a service subscriber still hopes to be able to participate in the group call in unexpected conditions that a mobile phone powers down or enters a cell outside the group call, or if a dispatcher still hopes to be able to participate in the current ongoing group call in abnormal conditions of power failure or entering a blind zone, the anchor MSC can use the registered temporary dispatcher to establish the call to the scheduled group call.

Furthermore, the registration request also can include a registration password, and after checking that a corresponding group call reference number exists, the GCR also checks whether the registration password is identical with a listening permission password corresponding to the group call reference number or a listening and speaking permission password corresponding to the group call reference number, if yes, the registration is performed, if no, the registration is not performed, and a registration failure message is returned to the anchor MSC.

Specifically, if it is checked that the registration password is identical with the listening permission password corresponding to the group call reference number, the GCR registers the registration number as the temporary dispatcher's number corresponding to the group call reference number, and records that the temporary dispatcher has a listening permission; or
if it is checked that the registration password is identical with the listening and speaking permission password corresponding to the group call reference number, the GCR registers the registration number as the temporary dispatcher's number corresponding to the group call reference number, and records that the temporary dispatcher has a listening and speaking permission.

Furthermore, after receiving the request of registering the temporary dispatcher sent by the user, the anchor MSC is further configured to: acquire the group call reference number and registration number required to be registered by the user and the registration password in the way of transmitting and receiving the numbers by Dual Tone Multi Frequency (DTMF).

Furthermore, the group call message can include: a calling number and a called number, and the called number includes the group call reference number;
the anchor MSC is further configured to: judge whether the calling number is identical with the temporary dispatcher's number registered by the GCR, if yes, use the registered temporary dispatcher's number to establish the call to the group call corresponding to the group call reference number, and if no, not use the registered temporary dispatcher's number to establish the call to the group call corresponding to the group call reference number.

Furthermore, after registering the temporary dispatcher's number, the GCR is further configured to: set a maximum keepalive timer of the temporary dispatcher, and when the timer times out, delete the temporary dispatcher's number.

Furthermore, the anchor MSC is further configured to: if a request of erasing the temporary dispatcher sent by the user is received or an answer message of the temporary dispatcher participating in the group call successfully is received, initiate an erasing request to the GCR, wherein the erasing request includes the group call reference number and the registered temporary dispatcher's number;
the GCR is further configured to: after receiving the erasing request, if checking that the group call reference number exists, delete the temporary dispatcher's number, so as to reduce the long-term occupancy of resources.

FIG. 2 is a flow diagram of a method for participating in the group call according to the present invention, and as shown in FIG. 2, the method of the present invention includes the following steps.

In step 10, after receiving a request of registering a temporary dispatcher sent by a user, an anchor MSC initiates a registration request to a GCR, and the registration request includes a group call reference number and a registration number required to be registered by the user.

Correspondingly, if the GCR checks that the group call reference number exists after receiving the registration request, it registers the registration number as a temporary dispatcher's number corresponding to the group call reference number.

In step 20, after receiving a group call message related to the group call reference number, the anchor MSC uses the temporary dispatcher's number registered by the GCR to establish a call to the group call corresponding to the group call reference number.

Therefore, in the following two conditions that, if the service subscriber still hopes to be able to participate in the group call in unexpected conditions that the mobile phone powers down or enters a cell outside the group call, and if the dispatcher still hopes to be able to participate in the current ongoing group call in abnormal conditions of power failure or entering a blind zone, the method of the present invention can be used to perform access to the scheduled group call.

In these two conditions, the user can use a mobile phone or a fixed phone to dial a specific number, and the specific number is analyzed and connected to the anchor MSC of this group call. The anchor MSC obtains information such as the number required to be registered by the user and the group call reference number required to be joined in the way of transmitting and receiving the numbers by DTMF, and for reasons of confidentiality, it also needs to check information such as the password and so on. Then, the anchor MSC saves the registered number in the GCR, and takes the registered number as the temporary dispatcher of this group call. The temporary dispatcher has two different permissions: listening permission and speaking permission, and different passwords can be used to set different permissions of the temporary dispatcher. For example, the user uses a password 1 to make registration, and sets that the temporary dispatcher only has the listening permission; the user uses a password 2 to make registration, and sets that the temporary dispatcher has both the listening permission and speaking permission. Generally, the user password 1 can be allocated to the service subscriber, so as to make the temporary dispatcher registered by the service subscriber only have the listening permission. The user password 2 is allocated to the dispatcher, so as to make the temporary dispatcher registered by the dispatcher have the listening and speaking permission.

When the next group call really comes, the anchor MSC will query the GCR, and the GCR returns this temporary dispatcher and the listening and speaking permission of the temporary dispatcher to the anchor MSC, and the anchor MSC can establish a dedicated channel to this temporary dispatcher like treating a real dispatcher, therefore, the user can participate in the group call in this way.

If the dispatcher or service subscriber in power failure wants to participate in the current ongoing group call, the dispatcher or service subscriber can directly use the registered temporary dispatcher's number to dial the group call reference number of the current group call, so as to participate in the group call.

When the service subscriber does not need the temporary dispatcher any more, the registered temporary dispatcher can be erased by dialing the specific number, so as to reduce the long-term occupancy of resources.

In addition, the registered temporary dispatcher also can be erased in following two erasing ways.
1. After the temporary dispatcher participates in the group call once successfully, the anchor MSC initiates a flow of erasing the temporary dispatcher initiatively.
2. The GCR sets a maximum keepalive timer of the temporary dispatcher, and when the timer times out, it deletes the temporary dispatcher automatically.

With the method of the present invention, compared with the related art, the problem that the service subscriber can not participate in the group call in abnormal conditions that the terminal powers down and the dispatcher can not continue to participate in the ongoing group call in abnormal conditions such as power failure and so on is solved, which improves the user satisfaction.

In order to better understand the present invention, the present invention will be further described in combination with the accompanying drawings and specific examples.

FIG. 3 is a flow diagram of registering a temporary dispatcher according to the example of the present invention.

In step 101, a user initiates a call and dials a registration access number for registering the temporary dispatcher.

The registration access number can be in a form of "anchor MSC number+registration access number", so that the call can be routed to a correct anchor MSC, and PSTN/MSC sends an Initial Address Message (IAM) to the anchor MSC.

In step 102, the anchor MSC receives the Initial Address Message (IAM), analyzes that a called number is the registration access number, sends an Address Complete Message (ACM) to the PSTN/MSC, then sends an Answer Message (ANM) to the PSTN/MSC, and it gives an in-band prompt tone to a calling user and prompts the user to be able to continue inputting.

In step 103, the user inputs contents such as "*group call reference number*registration number*password#" consecutively through DTMF, which ends with #.

In step 104, the anchor MSC receives numbers through the DTMF, acquires the group call reference number, registration number and registration password, and then sends a Registration Request message (RegisterReq) to a GCR.

In step 105, the GCR checks whether the group call reference number exists, and then checks whether the registration password is identical with a listening permission password (or a listening and speaking permission password) corresponding to the group call reference number, and if the two conditions are met, it saves the registration number in the temporary dispatcher of this group call reference number.

Furthermore, if the registration password is identical with the listening permission password of the group call reference number, it is recorded that the temporary dispatcher only has a listening permission; if the registration password is identical with the listening and speaking permission password of the group call reference number, it is recorded that the temporary dispatcher has a listening and speaking permission simultaneously, and a successful Registration Acknowledgement (RegisterAck) is finally returned to the anchor MSC.

In the planning of other conditions, the GCR returns an unsuccessful Registration Acknowledgement (RegisterAck) to the anchor MSC.

In step 106, the anchor MSC receives a registration acknowledgement message, and plays the prompt tone to the user according to the registration acknowledgement message.

If the registration acknowledgement message is a registration success message, the prompt tone of successful registration is played to the user; if the registration acknowledgement message is a registration failure message, the prompt tone of unsuccessful registration is played to the user, and after the broadcasting is completed, a Release message (Rel) is sent to release the call.

In step 107, the PSTN/MSC replies a Release complete message (Rlc) to the anchor MSC after receiving the Release message (Rel), and the call release is completed.

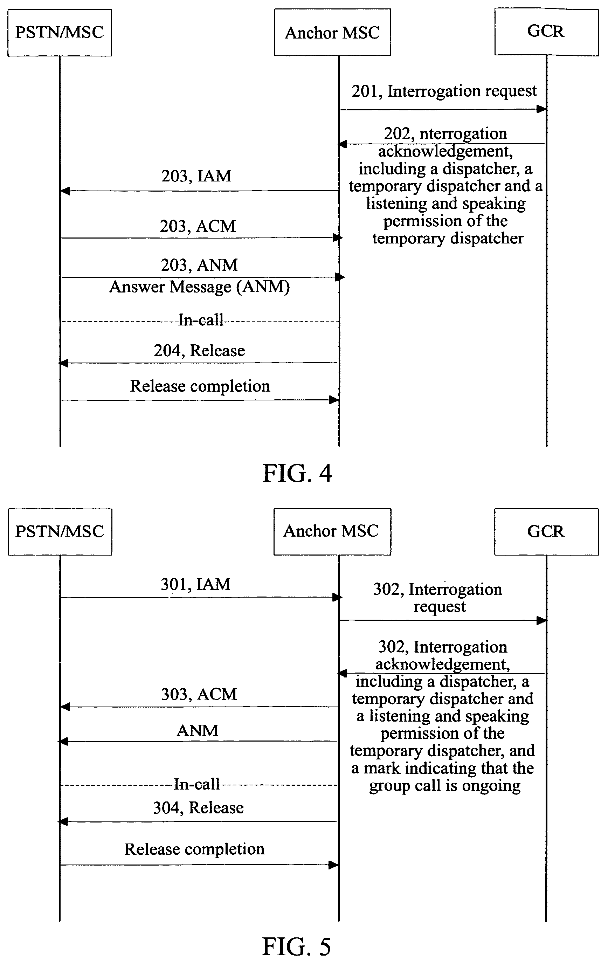

FIG. 4 is a flow diagram of the method for participating in the group call when the next group call comes according to the example of the present invention, and as shown in FIG. 4, following steps can be included.

In step 201, after the group call starts, an anchor MSC sends an Interrogation Request message (InterrogationReq) to a GCR.

In step 202, the GCR returns an Interrogation Acknowledgement message (InterrogationAck) to the anchor MSC, and the Interrogation Acknowledgement message contains a dispatcher, a temporary dispatcher and a listening and speaking permission of the temporary dispatcher.

In step 203, the anchor MSC establishes a call to the dispatcher and the temporary dispatcher respectively.

After the call to the temporary dispatcher is connected and answered, if the temporary dispatcher has the listening and speaking permission, he/she can speak at any time like the dispatcher, and if the temporary dispatcher only has the listening permission, he/she can only listen but can not speak.

In step 204, after the group call ends, the anchor MSC releases the call to the temporary dispatcher.

FIG. 5 is a flow diagram of the method for participating in an ongoing group call according to the example of the present invention. If a dispatcher or service subscriber in power failure wants to participate in the current ongoing group call, the registered temporary dispatcher's number can be directly used to dial a group call reference number of the current group call, so as to participate in the ongoing group call. As shown in FIG. 5, following steps can be included.

In step 301, a user uses the registered temporary dispatcher's to dial the group call reference number of this group call.

PSTN/MSC sends an Initial Address Message (IAM) to an anchor MSC, and in the message, a calling number is the registered temporary dispatcher's number, and a called number contains the group call reference number.

In step 302, the anchor MSC sends an Interrogation Request message (InterrogationReq) to a GCR. The GCR returns an Interrogation Acknowledgement message (InterrogationAck) to the anchor MSC, and the Interrogation Acknowledgement message contains a dispatcher, a temporary dispatcher and a listening and speaking permission of the temporary dispatcher, and also contains a mark indicating the group call is ongoing.

In step 303, the anchor MSC compares and judges whether the calling number of the call is identical with the temporary dispatcher's number, if yes, it agrees the temporary dispatcher to participate in the group call and replies an Address Complete Message (ACM) and an Answer Message (ANM) to the PSTN/MSC, and it establishes the call according to the listening and speaking permission of the temporary dispatcher; and if no, it does not agree the temporary dispatcher to participate in the group call, and the call ends.

In step 304, after the group call ends, the anchor MSC releases the call to the temporary dispatcher.

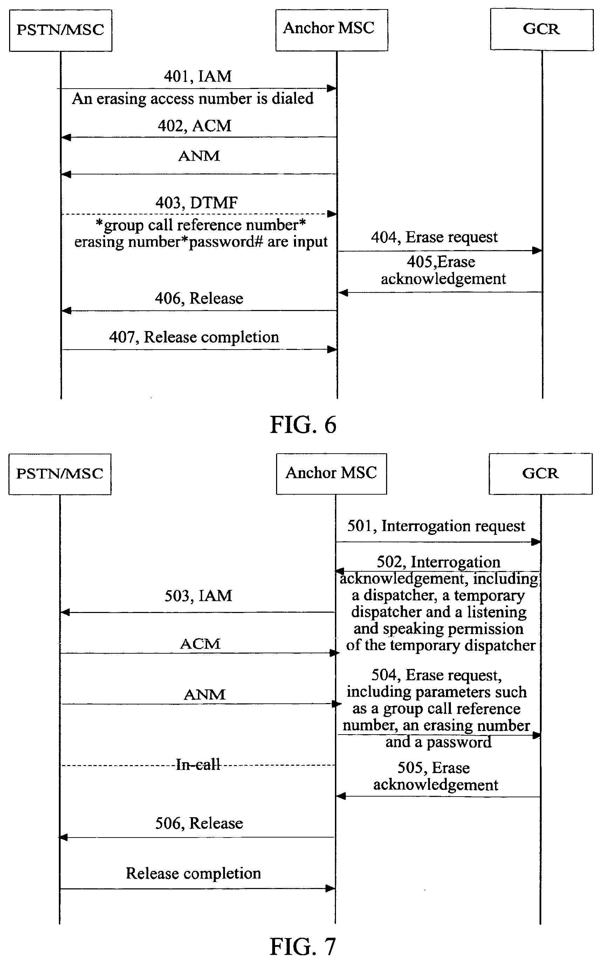

FIG. 6 is a flow diagram of the method for a user erasing a temporary dispatcher according to the example of the present invention, and as shown in FIG. 6, following steps are included.

In step 401, the user initiates a call and dials an access number for erasing the temporary dispatcher.

The access number for erasing the temporary dispatcher can be in a form of "anchor MSC number+erasing access number", so that the call can be routed to a correct anchor MSC, and PSTN/MSC sends an Initial Address Message (IAM) to the anchor MSC.

In step 402, the anchor MSC receives the Initial Address Message (IAM), analyzes that a called number is the erasing access number, sends an Address Complete Message (ACM) to the PSTN/MSC, then sends an Answer Message (ANM) to the PSTN/MSC, gives an in-band prompt tone to a calling user, and prompts the user to be able to continue inputting.

In step 403, the user can input contents such as "*group call reference number*erasing number*password#" consecutively through DTMF, which ends with #.

Wherein, the erasing number is the temporary dispatcher's number required to be erased.

In step 404, the anchor MSC receives numbers through the DTMF, acquires the group call reference number, the number required to be erased and the password, and then sends an Erase Request message (RegisterReq) to a GCR.

In step 405, the GCR checks whether the group call reference number exists, and then checks whether the password is identical with a listening permission password (or a listening and speaking permission password) of the group call reference number, and if the above two conditions are both met, it deletes the erasing number from the temporary dispatcher of this group call reference number (if the erasing number does not exist in the temporary dispatcher of the group call reference number, it also can be considered that the deletion is successful ), and then it returns a successful Erase Acknowledgement (EraseAck) to the anchor MSC; otherwise, the GCR returns an unsuccessful Erase Acknowledgement (EraseAck) to the anchor MSC.

In step 406, the anchor MSC receives an Erase Acknowledgement message, if the erasing is successful, it broadcasts the prompt tone of erasing successfully to the user; and if the erasing is unsuccessful, it broadcasts the prompt tone of erasing unsuccessfully to the user. After the broadcasting is completed, a Release message (Rel) is sent to release the call.

In step 407, the PSTN/MSC replies a Release complete message (Rlc) to the anchor MSC after receiving the Release message (Rel), and the call release is completed.

FIG. 7 is a flow diagram of the method for an anchor MSC erasing a temporary dispatcher initiatively according to the example of the present invention. The anchor MSC initiates erasing the temporary dispatcher initiatively after the temporary dispatcher participates in a group call successfully, therefore, in the condition that resources of temporary dispatcher are limited, other users can use the temporary dispatcher to participate in the group call again, so as to improve the utilization rate of the resources. As shown in FIG. 7, following steps are included.

Steps 501~503 are the same as steps 201~203.

In step 504, the anchor MSC receives an Answer Message (ANM) of the temporary dispatcher participating in the group call successfully and initiates an Erase Request message (EraseReq) to a GCR initiatively, and the message includes parameters such as a group call reference number, an erasing number and a password and so on.

Here, the password could be a compulsory erasing password configured on the anchor MSC.

In step 505, after the erasing is completed, the GCR returns a successful Erase Acknowledgement (EraseAck) or an unsuccessful Erase Acknowledgement (EraseAck) to the anchor MSC.

In step 506, after the call ends, the anchor MSC initiates the release to the temporary dispatcher.

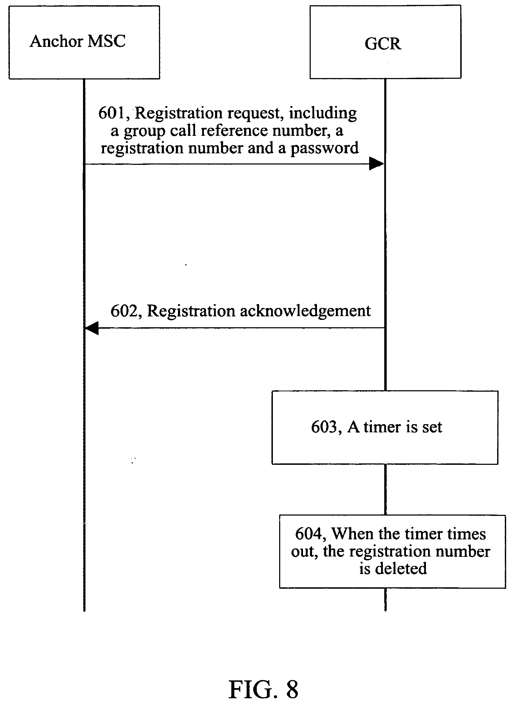

FIG. 8 is a flow diagram of the method for a GCR erasing a temporary dispatcher initiatively according to the example of the present invention, and as shown in FIG. 8, following steps are included.

In step 601, the GCR receives a Registration Request message (RegisterReq) of an anchor MSC.

In step 602, the GCR checks whether a group call reference number exists, then checks whether a password is identical with a listening permission password (or a listening and speaking permission password) of the group call reference number, and if the group call reference number exists and the passwords are identical, it saves a registration number in the temporary dispatcher of this group call reference number, and then returns a successful Registration Acknowledgement (RegisterAck) to the anchor MSC.

In step 603, after the temporary dispatcher is registered successfully, the GCR sets a maximum keepalive timer of the temporary dispatcher.

In step 604, when the timer times out, the GCR deletes the temporary dispatcher's number.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The above description is only the preferred examples of the present invention. Certainly, the present invention can still have other various examples. The person skilled in the art can make various corresponding changes and transformations according to the present invention without departing from the spirit and essence of the present invention, and these corresponding changes and transformations shall all fall into the protection scope of the appended claims of the present invention.

### Industrial Applicability

With the method and system for participating in the group call provided by the present invention, it enables the service subscriber to participate in a scheduled group call in unexpected conditions that a mobile phone powers down or enters a cell outside the group call, or enables the dispatcher to enter an ongoing group call again in abnormal conditions of power failure or entering a blind zone.

## Claims

1. A method for participating in a group call, **characterized by** comprising:
after receiving a group call reference number, a registration number, and a request of registering a temporary dispatcher sent by a user, an anchor mobile switching centre initiating a registration request, which carries a group call reference number and a registration number required to be registered by the user, to a group call register (10); wherein the user refers to an original dispatcher or a service subscriber in an abnormal condition that the terminal powers down or enters a blind zone, or enters a cell outside the group call accidently;
after receiving the registration request, the group call register checks whether the group call reference number exists, and if yes, the group call register registers the registration number as the temporary dispatcher's number corresponding to the group call reference number (601-602);
the group call register returning an Interrogation Acknowledgement message to the anchor mobile switching centre, wherein the Interrogation Acknowledgement message at least comprises a dispatcher's number, a temporary dispatcher's number and a listening and speaking permission of a temporary dispatcher, and a mark indicating the group call is ongoing;
after receiving the Interrogation Acknowledgement message related to the group call reference number, the anchor mobile switching centre using a temporary dispatcher's number registered by the group call register to establish a call to the group call corresponding to the group call reference number (20).

2. The method according to claim 1, wherein, the registration request further includes a registration password, and the step of the group call register registering the registration number as the temporary dispatcher's number corresponding to the group call reference number comprises:
if checking that the registration password is identical with a listening permission password corresponding to the group call reference number, registering the registration number as the temporary dispatcher's number corresponding to the group call reference number, and recording that the temporary dispatcher has a listening permission; or
if checking that the registration password is identical with a listening and speaking permission password corresponding to the group call reference number, registering the registration number as the temporary dispatcher's number corresponding to the group call reference number, and recording that the temporary dispatcher has a listening and speaking permission.

3. The method according to claim 1, wherein,
before the step of the anchor mobile switching centre using the temporary dispatcher's number registered by the group call register to establish a call to the group call corresponding to the group call reference number, the method further comprises: judging that the calling number is identical with the temporary dispatcher's number registered by the group call register.

4. The method according to any one of claims 1 to 3, wherein, after the step of the group call register registering the temporary dispatcher's number, the method further comprises:
setting a maximum keep alive timer of the temporary dispatcher, and when the timer times out, deleting the temporary dispatcher's number.

5. The method according to any one of claims 1 to 3, further comprising:
if receiving a request of erasing the temporary dispatcher sent by the user or receiving an answer message of the temporary dispatcher participating in the group call successfully, the anchor mobile switching centre initiating an erasing request, which includes the group call reference number and the registered temporary dispatcher's number, to the group call register;
after receiving the erasing request, if the group call register checks that the group call reference number exists, deleting the temporary dispatcher's number.

6. A system for participating in a group call, **characterized by** comprising:
an anchor mobile switching centre, configured to: after receiving a group call reference number, a registration number, and a request of registering a temporary dispatcher sent by a user, initiate a registration request, which includes a group call reference number and a registration number required to be registered by the user, to a group call register; after receiving a group call message related to the group call reference number, use a temporary dispatcher's number registered by the group call register to establish a call to the group call corresponding to the group call reference number; wherein the user refers to the dispatcher or service subscribers in abnormal conditions that the terminal powers down or enters a blind zone, or enters a cell outside the group call accidently;
wherein, the registration request further includes a registration password, the group call register is configured to: if checking that the registration password is identical with a listening permission password corresponding to the group call reference number, register the registration number as the temporary dispatcher's number corresponding to the group call reference number, and record that the temporary dispatcher has a listening permission; or if checking that the registration password is identical with a listening and speaking permission password corresponding to the group call reference number, register the registration number as the temporary dispatcher's number corresponding to the group call reference number, and record that the temporary dispatcher has a listening and speaking permission; and
the group call register, configured to: after receiving the registration request, register the registration number as the temporary dispatcher's number corresponding to the group call reference number; and further configured to return an Interrogation Acknowledgement message to the anchor mobile switching centre, wherein the Interrogation Acknowledgement message at least comprises a dispatcher's number, a temporary dispatcher's number and a listening and speaking permission of a temporary dispatcher, and a mark indicating the group call is ongoing.

7. The system according to claim 6, wherein,
the group call register is further configured to: after registering the temporary dispatcher's number, set a maximum keepalive timer of the temporary dispatcher, and when the timer times out, delete the temporary dispatcher's number.

8. The system according to claim 6, wherein,
the anchor mobile switching centre is further configured to: if a request of erasing the temporary dispatcher sent by the user is received or an answer message of the temporary dispatcher participating in the group call successfully is received, initiate an erasing request, which includes the group call reference number and the registered temporary dispatcher's number, to the group call register;
the group call register is further configured to: after receiving the erasing request, if checking that the group call reference number exists, delete the temporary dispatcher's number.

## Patentansprüche

1. Verfahren zum Teilnehmen in einem Gruppenanruf, dadurch charakterisiert, dass es aufweist:
nach Empfangen einer Gruppenanrufreferenznummer, einer Registrierungsnummer und einer von einem Benutzer versendeten Anforderung zum Registrieren eines temporären Versenders, initiiert eine Anker-Mobilschaltzentrale eine Registrierungsanforderung an ein Gruppenanrufregister (10), die eine Gruppenanrufreferenznummer und eine Registrierungsnummer, die von dem Benutzer registriert werden muss, trägt; wobei sich der Benutzer auf einen ursprünglichen Versender oder einen Dienstteilnehmer in einem unnormalen Zustand bezieht, in dem das Endgerät sich ausschaltet oder in ein Funkloch eintritt oder unbeabsichtigt in eine Zelle außerhalb des Gruppenanrufs eintritt;
nach Empfangen der Registrierungsanforderung überprüft das Gruppenanrufregister, ob die Gruppenanrufreferenznummer existiert und, falls ja, registriert das Gruppenanrufregister die Registrierungsnummer als die Nummer des temporären Versenders zugehörig zu der Gruppenanrufreferenznummer (601-602);
das Gruppenanrufregister sendet eine Abfragebestätigungsnachricht an die Anker-Mobilschaltzentrale zurück, wobei die Abfragebestätigungsnachricht mindestens eine Versendernummer, eine Nummer eines temporären Versenders und eine Zuhör- und Sprecherlaubnis eines temporären Versenders und eine Kennzeichnung, die angibt, dass der Gruppenanruf läuft, aufweist;
nach Empfangen der Abfragebestätigungsnachricht, die die Gruppenanrufreferenznummer betrifft, verwendet die Anker-Mobilschaltzentrale eine von dem Gruppenanrufregister registrierte Nummer eines temporären Versenders zum Aufbauen eines Anrufs zu dem Gruppenanruf, der zu der Gruppenanrufreferenznummer (20) gehört.

2. Verfahren gemäß Anspruch 1, wobei die Registrierungsanforderung ferner ein Registrierungspasswort enthält und der Schritt, in dem das Gruppenanrufregister die Registrierungsnummer als die Nummer des temporären Versenders zugehörig zu der Gruppenanrufreferenznummer registriert, aufweist:
falls nachgeprüft wird, dass das Registrierungspasswort identisch zu einem Zuhörerlaubnispasswort ist, das zu der Gruppenanrufreferenznummer gehört, Registrieren der Registrierungsnummer als die Nummer des temporären Versenders zugehörig zu der Gruppenanrufreferenznummer und Speichern, dass der temporäre Versender eine Zuhörerlaubnis hat; oder
falls nachgeprüft wird, dass das Registrierungspasswort identisch zu einem Zuhör- und Sprecherlaubnis Passwort ist, das zu der Gruppenanrufreferenznummer gehört, Registrieren der Registrierungsnummer als Nummer des temporären Versenders zugehörig zu der Gruppenanrufreferenznummer und Speichern, dass der temporäre Versender eine Zuhör- und Sprecherlaubnis hat.

3. Verfahren gemäß Anspruch 1, wobei
vor dem Schritt, in dem die Anker-Mobilschaltzentrale die von dem Gruppenanrufregister registrierte Nummer des temporären Versenders verwendet, um einen Anruf zu dem Gruppenanruf, der zu der Gruppenanrufreferenznummer gehört, aufzubauen, das Verfahren ferner aufweist: Entscheiden, dass die anrufendende Nummer mit der von dem Gruppenanrufregister registrierten Nummer des temporären Versenders identisch ist.

4. Verfahren gemäß einem der Ansprüche 1 bis 3, wobei, nach dem Schritt, in dem das Gruppenanrufregister die Nummer des temporären Versenders registriert, das Verfahren ferner aufweist:
Einstellen eines maximalen Aufrechterhaltungs-Timers des temporären Versenders und, falls der Timer abläuft, Löschen der Nummer des temporären Versenders.

5. Verfahren gemäß einem der Ansprüche 1 bis 3, ferner aufweisend:
wenn eine vom Benutzer gesendete Anforderung zum Löschen des temporären Versenders oder eine Antwortnachricht des temporären Versenders, der in dem Gruppenanruf teilnimmt, erfolgreich empfangen wird, initiiert die Anker-Mobilschaltzentrale eine Löschanforderung an das Gruppenanrufregister, die die Gruppenanrufreferenznummer und die registrierte Nummer des temporären Versenders aufweist;
nach Empfangen der Löschanforderungen Löschen der Nummer des temporären Versenders, falls das Gruppenanrufregister nachprüft, dass Gruppenanrufreferenznummer existiert.

6. System zum Teilnehmen in einem Gruppenanruf, dadurch charakterisiert, dass es aufweist:
eine Anker-Mobilschaltzentrale, eingerichtet zum: Nach Empfangen einer Gruppenanrufreferenznummer, einer Registrierungsnummer und einer von einem Benutzer gesendeten Anforderung zum Registrieren eines temporären Versenders, Initiieren eine Registrierungsanforderung an ein Gruppenanrufregister, die eine Gruppenanrufreferenznummer und eine Registrierungsnummer aufweist, die von dem Benutzer registriert werden muss; nach Empfangen einer Gruppenanrufnachricht, die zu der Gruppenanrufreferenznummer gehört, Verwenden einer von den Gruppenanrufregister registrierten Nummer eines temporären Versenders zum Aufbauen eines Anrufs zu dem Gruppenanruf, der zu der Gruppenreferenznummer gehört; wobei sich der Benutzer auf einen ursprünglichen Versender oder einen Dienstteilnehmer in einem unnormalen Zustand bezieht, in dem das Endgerät sich ausschaltet oder in ein Funkloch eintritt oder unbeabsichtigt in eine Zelle außerhalb des Gruppenanrufs eintritt;
wobei die Registrierungsanforderung ferner ein Registrierungspasswort enthält und das Gruppenanrufregister eingerichtet ist zum:
falls nachgeprüft wird, dass das Registrierungspasswort identisch zu einem Zuhörerlaubnispasswort ist, das zu der Gruppenanrufreferenznummer gehört, Registrieren der Registrierungsnummer als die Nummer des temporären Versenders zugehörig zu der Gruppenanrufreferenznummer und Speichern, dass der temporäre Versender eine Zuhörerlaubnis hat; oder falls nachgeprüft wird, dass das Registrierungspasswort identisch zu einem Zuhör- und Sprecherlaubnispasswort ist, das zu der Gruppenanrufreferenznummer gehört, Registrieren der Registrierungsnummer als Nummer des temporären Versenders zugehörig zu der Gruppenanrufreferenznummer und Speichern, dass der temporäre Versender eine Zuhör- und Sprecherlaubnis hat; und
das Gruppenanrufregister, eingerichtet zum: Nach Empfangen der Registrierungsanforderung, Registrieren der Registrierungsnummer als Nummer des temporären Versenders zugehörig zu der Gruppenanrufreferenznummer; und ferner eingerichtet zum Zurücksenden einer Abfragebestätigungsnachricht an die Anker-Mobilschaltzentrale,
wobei die Abfragebestätigungsnachricht mindestens einer Versendernummer, eine Nummer eines temporären Versenders und eine Zuhör- und Sprecherlaubnis eines temporären Versenders und eine Kennzeichnung, die angibt, dass der Gruppenanruf läuft, aufweist.

7. System gemäß Anspruch 6, wobei
das Gruppenanrufregister ferner eingerichtet ist zum: Nach Registrieren der Nummer des temporären Versenders, Einstellen eines maximalen Aufrechterhaltungs-Timers des temporären Versenders und, falls der Timer abläuft, Löschen der Nummer des temporären Versenders.

8. System gemäß Anspruch 6, wobei,
die Anker-Mobilschaltzentrale ferner eingerichtet ist zum:
wenn eine vom Benutzer gesendete Anforderung zum Löschen des temporären Versenders oder eine Antwortnachricht des temporären Versenders, der an dem Gruppenanruf teilnimmt, erfolgreich empfangen wird, Initiieren einer Löschanforderung an das Gruppenanrufregister, die die Gruppenanrufreferenznummer und die registrierte Nummer des temporären Versenders aufweist;
das Gruppenanrufregister ferner eingerichtet ist zum: nach Empfangen der Löschanforderungen Löschen der Nummer des temporären Versenders, falls das Gruppenanrufregister nachprüft, dass die Gruppenanrufreferenznummer existiert.

## Revendications

1. Procédé destiné à participer à un appel de groupe, **caractérisé par** les étapes suivantes :
- après la réception d'un numéro de référence d'appel de groupe, d'un numéro d'enregistrement, et d'une demande d'enregistrement d'un répartiteur provisoire envoyés par un utilisateur, un central mobile de point d'attache lance une demande d'enregistrement, qui porte un numéro de référence d'appel de groupe et un numéro d'enregistrement requis pour être enregistrés par l'utilisateur, vers un registre d'appel de groupe (10) ; dans lequel l'utilisateur signale à un répartiteur initial ou à un abonné de service dans un état anormal, que le terminal est hors tension ou pénètre dans une zone aveugle, ou pénètre de manière accidentelle dans une cellule qui se situe en dehors de l'appel de groupe ;
- après la réception de la demande d'enregistrement, le registre d'appel de groupe vérifie si le numéro de référence d'appel de groupe existe, et si tel est le cas, le registre d'appel de groupe enregistre le numéro d'enregistrement en tant que numéro de répartiteur provisoire correspondant au numéro de référence d'appel de groupe (601 - 602) ;
- le registre d'appel de groupe renvoie un message d'accusé de réception d'interrogation au central mobile de point d'attache, dans lequel le message d'accusé de réception d'interrogation comprend au moins un numéro de répartiteur, un numéro de répartiteur provisoire et une autorisation d'écoute et de parole d'un répartiteur provisoire, et un repère qui indique que l'appel de groupe est en cours ;
- après la réception du message d'accusé de réception d'interrogation associé au numéro de référence d'appel de groupe, le central mobile de point d'attache utilise un numéro de répartiteur provisoire enregistré par le registre d'appel de groupe de façon à établir un appel vers l'appel de groupe correspondant au numéro de référence d'appel de groupe (20).

2. Procédé selon la revendication 1, dans lequel, la demande d'enregistrement comprend en outre un mot de passe d'enregistrement, et l'étape dans laquelle le registre d'appel de groupe enregistre le numéro d'enregistrement en tant que numéro de répartiteur provisoire correspondant au numéro de référence d'appel de groupe, comprend les étapes suivantes :
- s'il est vérifié que le mot de passe d'enregistrement est identique à un mot de passe de permission d'écoute correspondant au numéro de référence d'appel de groupe, enregistrer le numéro d'enregistrement en tant que numéro de répartiteur provisoire correspondant au numéro de référence d'appel de groupe, et enregistrer que le répartiteur provisoire présente une permission d'écoute ; ou
- s'il est vérifié que le mot de passe d'enregistrement est identique à un mot de passe de permission d'écoute et de parole correspondant au numéro de référence d'appel de groupe, enregistrer le numéro d'enregistrement en tant que numéro de répartiteur provisoire correspondant au numéro de référence d'appel de groupe, et enregistrer que le répartiteur provisoire présente une permission d'écoute et de parole.

3. Procédé selon la revendication 1, dans lequel,
- avant l'étape dans laquelle le central mobile de point d'attache utilise le numéro de répartiteur provisoire enregistré par le registre d'appel de groupe de façon à établir un appel vers l'appel de groupe correspondant au numéro de référence d'appel de groupe, le procédé comprend en outre une étape consistant à : juger que le numéro d'appel est identique au numéro de répartiteur provisoire enregistré par le registre d'appel de groupe.

4. Procédé selon l'une quelconque des revendications 1 à 3, dans lequel, après l'étape dans laquelle le registre d'appel de groupe enregistre le numéro de répartiteur provisoire, le procédé comprend en outre une étape consistant à :
- régler un temporisateur de maintien en activité maximum du répartiteur provisoire, et lorsque le temporisateur s'arrête, effacer le numéro de répartiteur provisoire.

5. Procédé selon l'une quelconque des revendications 1 à 3, comprenant en outre les étapes suivantes :
- si la réception d'une demande d'effacement du répartiteur provisoire envoyée par l'utilisateur ou si la réception d'un message de réponse du répartiteur provisoire participant à l'appel de groupe est couronnée de succès, le central mobile de point d'attache lance une demande d'effacement, qui comprend le numéro de référence d'appel de groupe et le numéro de répartiteur provisoire enregistré, vers le registre d'appel de groupe ;
- après la réception de la demande d'effacement, si le registre d'appel de groupe vérifie que le numéro de référence d'appel de groupe existe, effacer le numéro de répartiteur provisoire.

6. Système destiné à participer à un appel de groupe, **caractérisé par le fait qu'**il comprend :
- un central mobile de point d'attache, configuré de façon à : après la réception d'un numéro de référence d'appel de groupe, d'un numéro d'enregistrement, et d'une demande d'enregistrement d'un répartiteur provisoire envoyés par un utilisateur, lancer une demande d'enregistrement, qui comprend un numéro de référence d'appel de groupe et un numéro d'enregistrement requis pour être enregistrés par l'utilisateur, vers un registre d'appel de groupe ; après la réception d'un message d'appel de groupe associé au numéro de référence d'appel de groupe, utiliser un numéro de répartiteur provisoire enregistré par le registre d'appel de groupe de façon à établir un appel vers l'appel de groupe correspondant au numéro de référence d'appel de groupe ; dans lequel l'utilisateur signale au répartiteur initial ou à des abonné de service dans des états anormaux, que le terminal est hors tension ou pénètre dans une zone aveugle, ou pénètre de manière accidentelle dans une cellule qui se situe en dehors de l'appel de groupe ;
- dans lequel, la demande d'enregistrement comprend en outre un mot de passe d'enregistrement, le registre d'appel de groupe étant configuré de façon à : s'il est vérifié que le mot de passe d'enregistrement est identique à un mot de passe de permission d'écoute correspondant au numéro de référence d'appel de groupe, enregistrer le numéro d'enregistrement en tant que numéro de répartiteur provisoire correspondant au numéro de référence d'appel de groupe, et enregistrer que le répartiteur provisoire présente une permission d'écoute ; s'il est vérifié que le mot de passe d'enregistrement est identique à un mot de passe de permission d'écoute et de parole correspondant au numéro de référence d'appel de groupe, enregistrer le numéro d'enregistrement en tant que numéro de répartiteur provisoire correspondant au numéro de référence d'appel de groupe, et enregistrer que le répartiteur provisoire présente une permission d'écoute et de parole ; et
- le registre d'appel de groupe, est configuré de façon à : après la réception de la demande d'enregistrement, enregistrer le numéro d'enregistrement en tant que numéro de répartiteur provisoire correspondant au numéro de référence d'appel de groupe ; et est configuré en outre de façon à renvoyer un message d'accusé de réception d'interrogation au central mobile de point d'attache, dans lequel le message d'accusé de réception d'interrogation comprend au moins un numéro de répartiteur, un numéro de répartiteur provisoire et une autorisation d'écoute et de parole d'un répartiteur provisoire, et un repère qui indique que l'appel de groupe est en cours.

7. Système selon la revendication 6, dans lequel,
- le registre d'appel de groupe, est configuré en outre de façon à : après l'enregistrement du numéro de répartiteur provisoire, régler un temporisateur de maintien en activité maximum du répartiteur provisoire, et lorsque le temporisateur s'arrête, effacer le numéro de répartiteur provisoire.

8. Système selon la revendication 6, dans lequel,
- le central mobile de point d'attache, est configuré en outre de façon à : si une demande d'effacement du répartiteur provisoire envoyée par l'utilisateur est reçue, ou si un message de réponse du répartiteur provisoire participant à l'appel de groupe est reçu avec succès, lancer une demande d'effacement, qui comprend le numéro de référence d'appel de groupe et le numéro de répartiteur provisoire enregistré, vers le registre d'appel de groupe ;
- le registre d'appel de groupe, est configuré en outre de façon à : après la réception de la demande d'effacement, s'il est vérifié que le numéro de référence d'appel de groupe existe, effacer le numéro de répartiteur provisoire.
